# EUROPÄISCHE PATENTANMELDUNG

(11) **EP 1 040 940 A2**
(43) Veröffentlichungstag der Anmeldung: **04.10.2000**
(21) Anmeldenummer: 00101023.0
(22) Anmeldetag: 20.01.2000
(51) Int. Cl.: B60B 3/10, B60B 3/04, B60B 23/00, B23K 15/00, B23K 20/12

(54) **Fahrzeugrad**

(30) Priorität: 27.03.1999 DE 19914051
(71) Anmelder: Dr.Ing. h.c.F. Porsche Aktiengesellschaft, 70435 Stuttgart (DE)
(72) Erfinder: Stach, Jens, 71296 Heimsheim (DE)

(57) **Zusammenfassung**

Das Fahrzeugrad besteht aus einem Radstern (2) und einer Felge (3), die miteinander durch eine Schweißung verbindbar sind. Hierzu sind am Radstern sowie an der Felge miteinander korrespondierende Verbindungsflächen (9-19) vorgesehen, welche unterschiedlich schräg oder gleich schräg angestellt sind, damit eine Zentrierung der beiden Radteile zur Schweißung miteinander bewirkt wird.

## Beschreibung

Die Erfindung bezieht sich auf ein Fahrzeugrad mit einem Hohlspeichen umfassenden Radstern nach dem Oberbegriff des Anspruchs 1.

Aus der EP 0 816 125 A2 ist ein Verfahren zum Verbinden von zwei Radteilen, wie einem Radstern mit einer Felge über eine Schweißung, wie beispielsweise mittels einer Elektronenstrahlschweißung bekannt. Das Fahrzeugrad umfaßt zwei als Kreisringe ausgebildete Verbindungsflächen am Radstern sowie an der Felge, die sich gegenüber stehen und gemeinsam in einer vertikalen Ebene ausgerichtet sind. Desweiteren ist aus der DE 41 38 558 C2 ein Rad bekannt, das ebenfalls zwei als Kreisringe ausgeführte Verbindungsflächen am Radstern sowie an der Feige umfaßt, wobei die Verbindung der beiden Radteile über eine Reibschweißung erfolgt.

Aufgabe der Erfindung ist es, ein zweigeteiltes Rad bestehend aus einem Radstern und einer Felge zu schaffen, die in einfacher Weise zum Schweißen zusammensetzbar sind und eine Schweißung ohne Bauteilbehinderung durchführbar ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch mindestens eine schräg angestellte Verbindungsfläche des Kreisringes am Radstern und/oder an der Feige beim Zusammenfügen eine Zentrierung der beiden Radteile zueinander bewirkt wird. Hierdurch sind die beiden Radteile zum Schweißen genau zueinander positioniert, und eine Exzentrität zwischen den Radteilen wird vermieden.

Neben diesem Effekt der optimalen Zentrierung der beiden Radteile zueinander wird insbesondere durch die schräggestellten Verbindungsflächen an den inneren Kreisringen der beiden Radteile eine gute Zugänglichkeit beim Schweißen, insbesondere beim Strahlschweißen, wie einem Plasma- und Lichtbogenschweißen gewährleistet. Die miteinander korrespondierenden inneren Verbindungsflächen an den Kreisringen des Radsterns und der Felge sind hierzu schräg von innen nach außen unter einem spitzen Winkel zu einer senkrechten Radmittenlängsebene angeordnet, so daß zum Schweißen genügend Freiraum zur Hohlspeiche des Radsterns vorhanden ist.

Die korrespondierenden äußeren Verbindungsflächen des Kreisringes am Radstern und an der Feige können entweder eine gleiche nach außen gerichtete Schrägstellung wie die inneren Verbindungsflächen aufweisen oder eine nach innen gerichtete Schrägstellung besitzen.

Nach einer weiteren Ausführung sind die äußeren korrespondierenden Verbindungsflächen der Kreisringe parallel zur Radmittenlängsebene ausgeführt. Wenn zwischen den Hohlrippen des Radsterns und den inneren Verbindungsflächen der Kreisringe ein ausreichender Abstand vorhanden ist, können diese Verbindungsflächen ebenfalls parallel zur senkrechten Radmittenlängsebene ausgeführt sein.

Bei allen Ausführungen sind jeweils äußere und/oder innere korrespondierende Verbindungsflächen der Radteile schräg unter einem Winkel zur Radmittenlängsebene ausgeführt.

Nach einer weiteren Ausführung können die Verbindungsflächen korrespondierende stufenförmige Absetzungen aufweisen, welche eine Zentrierung der beiden Radteile beim Zusammenfügen ergeben. Diese stufenförmigen Absetzungen können auch unter einem Winkel schräg angestellt sein, damit eine gute Zugänglichkeit beim Schweißen gewährleistet ist.

Als Schweißverfahren zum Verbinden der beiden Radteile im Bereich der Verbindungsflächen werden Strahlschweißverfahren, wie Lichtbogen-, Plasma- oder Laserschweißverfahren angewendet. Desweiteren ist auch das Elektronenstrahlschweißen unter Vakuum oder in Atmosphäre möglich. Ferner kann auch ein Reibschweißverfahren angewendet werden, was durch die Selbstzentrierung der beiden Radteile mittels mindestens einer inneren oder äußeren schräg verlaufenden Verbindungsfläche vorteilig ist.

Ausführungsbeispiele der Erfindung sind in den Zeichnungen dargestellt und werden im folgenden näher beschrieben:

Es zeigen
- Fig. 1: einen Schnitt durch ein teilweise dargestelltes Rad mit zwei durch Kreisringe gebildete korrespondierende Verbindungsflächen, die verschieden schräg angestellt sind,
- Fig. 2: eine weitere Ausführung mit gleich schräg angestellten Verbindungsflächen,
- Fig. 3: eine weitere Ausführung mit einer inneren schräg angestellten Verbindungsfläche und einer äußeren vertikal ausgerichteten Verbindungsfläche,
- Fig. 4: eine weitere Ausführung mit einer äußeren schräg angestellten Verbindungsfläche und einer inneren vertikal ausgerichteten Verbindungsfläche,
- Fig. 5: eine weitere Ausführung mit stufenförmigen Absetzungen in den korrespondierenden Verbindungsflächen der Radteile und
- Fig. 6: eine vergrößerte Darstellung der stufenförmigen Absetzungen in den Verbindungsflächen nach Fig. 5.

Ein Fahrzeugrad 1 umfaßt im wesentlichen einen Radstern 2 und eine Feige 3, die getrennt voneinander herstellbar sind und im Bereich eines inneren Endes 4 der Felge 3 über eine Schweißung miteinander verbunden sind.

Hierzu weist der Radstern 2 und die Felge 3 jeweils einen vorstehenden Kreisring 5, 6 und 7, 8 mit korrespondierenden Verbindungsflächen 9, 10, 11, 12; 14, 15; 16, 17; 18, 19 auf, die sich gegenüber stehen und durch die Schweißung miteinander verbunden werden.

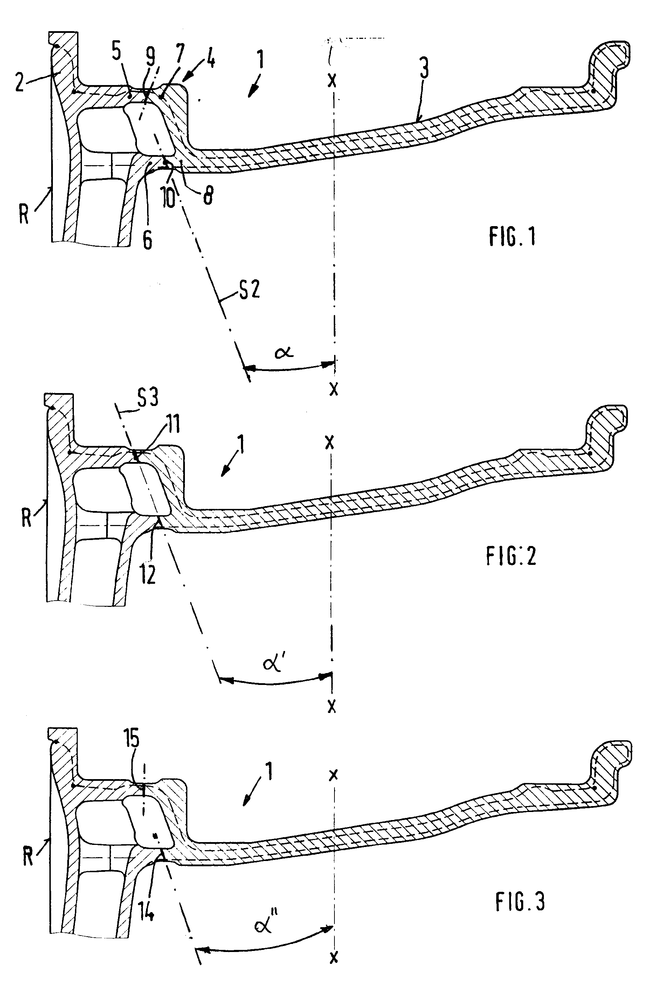

Gemäß Fig. 1 ist die zwischen den Kreisringen 6, 8 angeordnete innere Verbindungsfläche 10 unter einem Winkel α schräg von innen nach außen oder unter einem spitzen Winkel α zu einer senkrechten Radmittenlängsebene x-x angestellt. Die weitere äußere Verbindungsfläche 9 ist entgegengesetzt zur inneren Verbindungsfläche 10 ausgerichtet.

Nach einer Ausführung gemäß Fig. 2 sind die äußeren und inneren Verbindungsflächen 11, 12 zur Radaußenseite R hin in einer gleichen schrägen Ebene S3 vorgesehen, die unter einem spitzen Winkel α' zur senkrechten Radmittenlängsebene x-x angestellt ist.

Nach einer weiteren Ausführung gemäß Fig. 3 ist die innere Verbindungsfläche 14 unter einem spitzen Winkel α'' zur senkrechten Radmittenlängsebene x-x zur Radaußenseite R hin geneigt angestellt, wobei die äußere Verbindungsfläche 15 parallel zur senkrechten Radmittenlängsebene x-x verläuft.

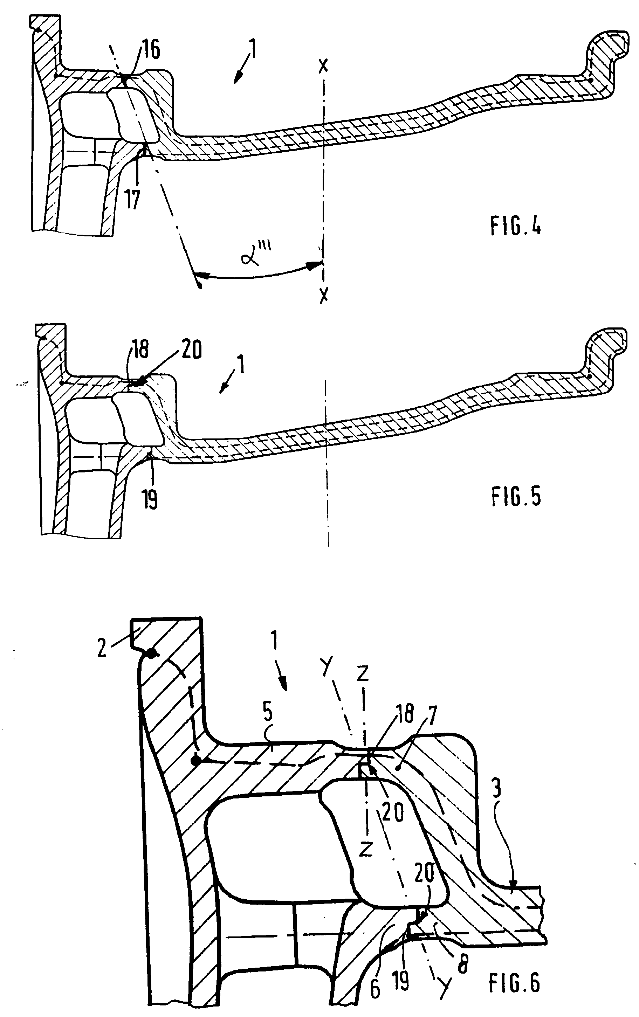

Gemäß Fig. 4 ist die äußere Verbindungsfläche 16 schräg von innen nach außen unter einem spitzen Winkel α''' zur senkrechten Radmittenlängsebene x-x geneigt angeordnet, wobei die innere Verbindungsfläche 17 parallel zur senkrechten Radmittenlängsebene x-x angestellt verläuft.

Alle Verbindungsflächen der Radteile 2, 3 sind plan bzw. eben ausgeführt und liegen dicht aufeinander. Ausführungen der Verbindungsflächen in profilierter oder konkaver oder konvexer Form mit entsprechenden korrespondierenden Verbindungsflächen sind ebenfalls möglich.

Die weitere Ausführung gemäß der Fig. 5 und 6 umfaßt Verbindungsflächen 17 und 18 zwischen den Radteilen 2 und 3, die jeweils stufenförmig bzw. treppenförmig ausgebildet sind. Die Verbindungsflächen 18, 19 weisen jeweils eine treppenförmige Abstufung auf, die formschlüssig ineinander greifen und somit eine Zentrierung zueinander bewirken. Die Verbindungsflächen 18, 19 sind im Ausführungsbeispiel vertikal in der Ebene z-z ausgerichtet, sie können aber auch unter eine Schrägebene y-y angeordnet sein.

Die Schweißung der Verbindungsflächen kann von außen, von innen, einzeln oder gemeinsam entsprechend dem verwendeten Schweißverfahren erfolgen.

## Patentansprüche

1. Fahrzeugrad mit einem Hohlspeichen umfassenden Radstern, der im Anschlußbereich der Felge über mindestens eine Schweißung mit dieser verbunden ist, wobei der Radstern und die Felge innere und äußere als Kreisringe ausgebildete Verbindungsflächen aufweisen, die sich korrespondierend gegenüberstehen, dadurch gekennzeichnet, daß mindestens die eine innere Verbindungsfläche (10; 12, 14; 17; 19) oder mindestens die weitere äußere Verbindungsfläche (9; 11; 15; 16; 18) der beiden Kreisringe (5; 6; 7; 8) unter einem Winkel (α; α'; α''; α''') schräg zu einer senkrechten Radmittenlängsebene (x-x) zur Verbindung und Zentrierung der Radteile (2, 3) angestellt ist.

2. Fahrzeugrad nach Anspruch 1, dadurch gekennzeichnet, daß die äußeren Verbindungsflächen (9) der Radteile (2, 3) unter einem Winkel schräg von außen nach innen zur Radaußenseite (R) hin und die weiteren inneren Verbindungsflächen (10) der Radteile (2, 3) schräg nach außen unter einem Winkel (α) zur senkrechten Radmittenlängsebene (x-x) angestellt sind und sich entgegengesetzt geneigte Schweißebenen (S1 und S2) ergeben.

3. Fahrzeugrad nach Anspruch 1, dadurch gekennzeichnet, daß die äußeren und inneren Verbindungsflächen (11, 12) der Radteile (2, 3) jeweils unter einem gleichen Winkel (α') zur senkrechten Radmittenlängsebene (x-x) schräg von innen nach außen angestellt sind und diese Verbindungsflächen in einer gemeinsamen Schweißebene (S3) liegen.

4. Fahrzeugrad nach Anspruch 1, dadurch gekennzeichnet, daß die äußeren Verbindungsflächen (15) der Radteile (2, 3) parallel zur senkrechten Radmittenlängsebene (x-x) angeordnet sind, wobei die inneren Verbindungsflächen (14) schräg von innen nach außen unter einem Winkel (α'') zur senkrechten Radmittenlängsebene (x-x) verlaufen.

5. Fahrzeugrad nach Anspruch 1, dadurch gekennzeichnet, daß die äußeren Verbindungsflächen (16) schräg nach außen unter einem Winkel (α''') zur senkrechten Radmittenlängsebene (x-x) angestellt sind, wobei die inneren Verbindungsflächen (17) parallel zur senkrechten Radmittenlängsebene (x-x) verlaufen.

6. Fahrzeugrad nach einem oder mehreren der vorhergehenden Ansprüche, dadurch gekennzeichnet, daß die Verbindungsflächen der Radteile (2, 3) jeweils flächig plan ausgeführt sind.

7. Fahrzeugrad mit einem Hohlspeichen umfassenden Radstern, der im Anschlußbereich der Feige über mindestens eine Schweißung mit dieser verbunden ist, wobei der Radstern und die Felge mindestens innere und äußere als Kreisringe ausgebildete Verbindungsflächen aufweist, die sich korrespondierend gegenüberstehen, dadurch gekennzeichnet, daß die inneren und äußeren Verbindungsflächen (18, 19) jeweils miteinander korrespondierende stufenförmig ausgebildete Flächen (20) aufweisen.

8. Fahrzeugrad nach Anspruch 7, dadurch gekennzeichnet, daß die stufenförmigen Flächen (20) aus miteinander korrespondierenden stufenförmigen Absetzungen (19, 10) bestehen, die formschlüssig ineinander greifen.

9. Fahrzeugrad nach einem oder mehreren der vorhergehenden Ansprüche, dadurch gekennzeichnet, daß die Verbindungsflächen (9, 10; 11, 12; 14, 15; 16, 17; 19, 20) der beiden Radteile (2, 3) durch ein Strahlschweißverfahren miteinander verbindbar sind.

10. Fahrzeugrad nach einem oder mehreren der vorhergehenden Ansprüche, dadurch gekennzeichnet, daß die Verbindungsflächen (9, 10; 11, 12; 14, 15; 16, 17; 19, 20) der beiden Radteile (2, 3) durch ein Elektronenstrahlschweißverfahren miteinander verbindbar sind.

11. Fahrzeugrad nach einem oder mehreren der vorhergehenden Ansprüche, dadurch gekennzeichnet, daß die Verbindungsflächen (9, 10; 11, 12; 14, 15; 16, 17; 19, 20) der beiden Radteile (2, 3) durch eine Reibschweißung miteinander verbindbar sind.
